(19) **Europäisches Patentamt / European Patent Office / Office européen des brevets**

(11) **EP 1 502 481 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(21) Anmeldenummer: **03724860.6**

(22) Anmeldetag: **02.04.2003**

(51) Int Cl.:
***H05B 33/08*** (2006.01)

(86) Internationale Anmeldenummer:
**PCT/DE2003/001117**

(87) Internationale Veröffentlichungsnummer:
**WO 2003/096753 (20.11.2003 Gazette 2003/47)**

(54) **SCHALTUNGSANORDNUNG ZUM BETREIBEN EINES LEUCHTZEICHENS**

CIRCUIT FOR OPERATING A LIGHT SIGNAL

ENSEMBLE CIRCUIT DESTINE AU FONCTIONNEMENT D'UN VOYANT LUMINEUX

(84) Benannte Vertragsstaaten:
**AT BE BG CH CY CZ DE DK EE ES FI FR GB GR HU IE IT LI LU MC NL PT RO SE SI SK TR**

(30) Priorität: **08.05.2002 DE 10221573**

(43) Veröffentlichungstag der Anmeldung:
**02.02.2005 Patentblatt 2005/05**

(73) Patentinhaber: SIEMENS
**AKTIENGESELLSCHAFT
80333 München (DE)**

(72) Erfinder:
• **COLBERG, Jens
15754 Bindow (DE)**
• **ZIMMERMANN, Dirk
13053 Berlin (DE)**

(56) Entgegenhaltungen:
**EP-A- 0 456 857          EP-A- 0 992 961
DE-A- 2 304 620          DE-A- 19 943 256**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Schaltungsanordnung zum Betreiben eines Leuchtzeichens, insbesondere eines LED-Signals.

Leuchtzeichen auf der Basis von Leuchtdioden anstelle von Glühlampen werden in vielen Bereichen, insbesondere in der Signaltechnik zunehmend angewendet. Leuchtdioden sind vergleichsweise preiswert, langlebig und lichtstark.

Aus der DE 199 43 256 A1 ist eine Schaltung zur Ansteuerung einer Leuchtdioden-Lichteinheit für Fahrzeuge bekannt. Um Verzerrungen bei Wechselspannungsbetrieb zu vermindern, ist die Schaltung mit einem Bypasszweig ausgestattet, welcher den Strom aufnimmt, wenn der Stromdurchfluss durch die Lichteinheit im wesentlichen gesperrt ist.

Eine Besonderheit bei Lichtsignalen ist die Notwendigkeit der Anpassung an Umgebungsbedingungen mit nicht konstanten Lichtverhältnissen. Hier ist schaltungstechnisch eine Absenkung der Lichtleistung für den Nachtbetrieb gegenüber dem Tagbetrieb zu realisieren. Bei Lichtsignalen auf Glühlampenbasis, beispielsweise in der Eisenbahntechnik, wird die Helligkeit zwischen Tag und Nacht über die Speisespannung bzw. den Speisestrom vom Stellwerk gesteuert. Da die Lichtleistung einer Glühlampe exponentiell von der Speisespannung bzw. dem Speisestrom abhängt, führt eine kleine Änderung des Speisestromes bzw. der Speisespannung zu einer großen Änderung der Lichtleistung. Um bei Leuchtdioden einen ähnlich günstigen Kennlinienverlauf zu erreichen, wurde gemäß der DE 198 46 753 A1 vorgeschlagen, zu jeder Leuchtdiode eine Ansteuerschaltung parallel zu schalten. Ein derartiges Lichtsignal besitzt die Eigenschaften einer hohen Verfügbarkeit bei Abhängigkeit der Helligkeit von der Ansteuerung sowie Störsignalunterdrückung und definiertes Ausfallverhalten. Aus der DE 198 46 753 A1 sind spezielle Anordnungen für Wechselspannung und für Gleichspannung bekannt. Bei der Wechselspannungsvariante werden die LEDs nur mit einer Halbwelle betrieben. Dadurch wird ein Teil der möglichen Lichtausbeute verschenkt.

Der Erfindung liegt die Aufgabe zugrunde, diese Nachteile zu beseitigen und eine Schaltungsanordnung anzugeben, die die LEDs mit dem maximal möglichen Speisestrom treibt. Darüber hinaus sollte die Schaltungsanordnung sowohl für Wechselspannungs- als auch für Gleichspannungsbetrieb geeignet sein.

Die Aufgabe wird erfindungsgemäß mit den Merkmalen des Patentanspruchs gelöst. Durch die Beschaltung der Leuchtdiode mit einer Graetzgleitrichterbrücke kann die Leuchtdiode von beiden Richtungen aus bestromt werden. Dadurch werden bei Wechselspannung beide Halbwellen wirksam, so dass letztlich der gesamte Speisestrom ausgenutzt wird und die speisestromproportionale Lichtstärke entsprechend zunimmt. Weiterhin hat der Speisestrom direkten Einfluss auf die Lebensdauer der Leuchtdiode. Je kleiner der Speisestrom ist, desto größer ist die Lebensdauer. Soll die Lichtstärke gegenüber der aus der DE 198 46 753 A1 bekannten Schaltungsanordnung nicht vergrößert werden, erhöht sich somit die Lebensdauer der Leuchtdiode. Die vorteilhaften Eigenschaften der bekannten Schaltungsanordnung, nämlich insbesondere hohe Verfügbarkeit, Änderung der Helligkeit in Abhängigkeit von der Ansteuerung, Unterdrückung von Störsignalen und definiertes Ausgangsverhalten, bleiben dabei erhalten. Die Anzahl der erforderlichen Bauelemente ist nicht notwendig größer. Anstelle einer Schutzdiode parallel zur LED ist erfindungsgemäß eine Graetzgleichrichterbrücke vorgesehen.

Die Schaltungsanordnung ist vorteilhafterweise sowohl für Gleichspannungs- als auch für Wechselspannungsbetrieb geeignet.

Ein weiterer Vorteil des Wechselspannungsbetriebes mit beiden Halbwellen der Speisespannung besteht in der Ausweitung des Frequenzbereiches der Speisespannung. Bei der bekannten Schaltungsanordnung ist bei Speisespannungsfrequenzen unterhalb 40 Hz ein Flackern zu erkennen. Dieses Flackern tritt bei der Nutzung beider Halbwellen erst bei wesentlich kleineren Frequenzen auf.

Der Leuchtdiodenvorschaltwiderstand und der Spannungsteilerwiderstand, welche an dem gleichen Pol der Speisespannung anliegen, sind vorzugsweise Widerstände mit definiertem Auswahlverhalten, d.h. dass bestimmte Defekte, beispielsweise vollständige Kurzschlüsse so unwahrscheinlich sind, dass sie praktisch nicht auftreten. Die Widerstände sind weiterhin derart ausgelegt, dass Fehler, beispielsweise Kurzschluss der Leuchtdiode oder der Steuerung sich nur geringfügig auf die Gesamtstromaufnahme der Schaltungsanordnung auswirken. Zum Beispiel würde sich bei einem Kurzschluss der Steuerung bei einem LED-Signal mit 60 Leuchtdioden der Gesamtstrom nur um ca. 5% erhöhen.

Der Schalter, der einen seriellen Widerstand in Abhängigkeit von dem Spannungsabfall an den Spannungsteiler zuschaltet, besteht aus zwei parallel geschalteten Transistoren, zu denen jeweils Dioden zur Vorgabe entgegengesetzter Stromrichtungen in Reihe geschaltet sind, wobei die Emitter der Transistoren über die Graetzgleichrichterbrücke mit der Kathode der Leuchtdiode verbunden sind. Die beiden Transistoren werden dabei abwechselnd durchgeschaltet, wobei der eine Transistor von der positiven Halbwelle und der andere Transistor von der negativen Halbwelle der Speisespannung aktiviert werden. Dazu können Transistoren in komplementärer Technik, npn-Technik und pnp-Technik verwendet werden. Die Dioden dienen zur Vorgabe der Stromrichtung, in der die Transistoren bestromt werden.

Die Erfindung wird nachfolgend anhand figürlicher Darstellungen näher erläutert. Es zeigen:

Figur 1    eine Schaltungsanordnung zum Betreiben eines Leuchtzeichens und

Figur 2    eine Ansteuerschaltung gemäß Figur 1.

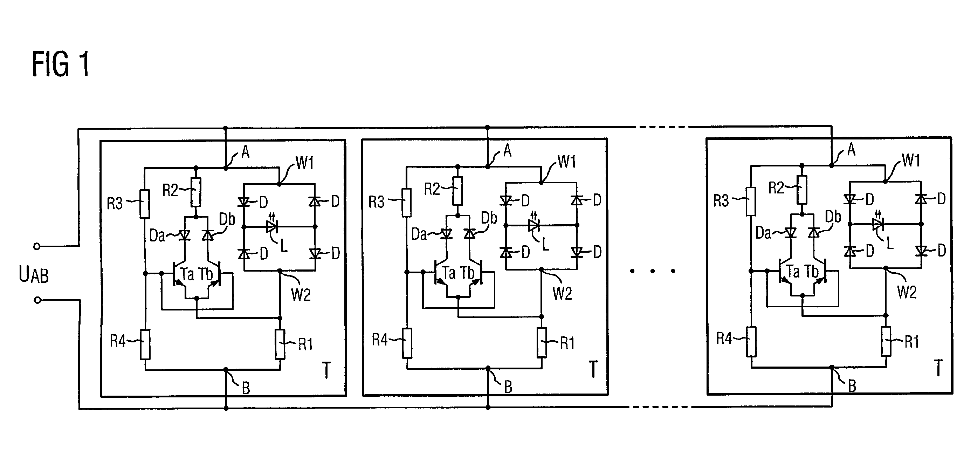

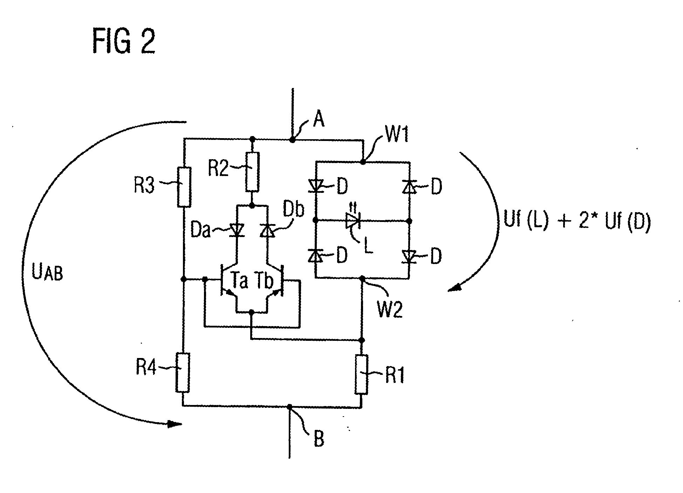

Figur 1 veranschaulicht den allgemeinen Aufbau eines LED-Signals mit n Treibern T, wobei jeder Treiber T mindestens eine LED L steuert. Zu den LEDs L ist jeweils mindestens eine Steuerung parallel geschaltet. Die LED-Steuerung ist mit beiden Polen A und B direkt mit der Speisespannung $U_{AB}$ verbunden. An den Pol A ist außerdem ein Pol W1 einer Graetzgleichrichterbrücke angeschlossen, deren anderer Pol W2 über einen Widerstand R1 mit dem zweiten Pol der Speisespannung $U_{AB}$ verbunden ist. Die Graetzgleichrichterbrücke besteht im Wesentlichen aus vier Dioden D, deren Stromrichtung derart orientiert ist, dass die LED L bei positiver und negativer Halbwelle einer Wechselspannung immer von der Anode zur Kathode durchflossen wird. Die Steuerung besteht im Wesentlichen aus einer Schalteranordnung, zu der ein Widerstand R2 in Reihe geschaltet ist und die von einem Spannungsteiler R3/R4 beaufschlagt wird. Diese Schalteranordnung ist bei der in den Figuren 1 und 2 dargestellten Ausführungsform als Transistorschalter ausgebildet. Zwei Transistoren Ta und Tb sind mit Dioden Da und Db zur Stromrichtungsvorgabe geschaltet, wobei jeweils die Basis der beiden Transistoren Ta und Tb mit dem Spannungsteiler R3/R4 verbunden ist. Mit Hilfe der Transistoren Ta und Tb kann der Widerstand R2 parallel zur LED L in Abhängigkeit von der Speisespannung $U_{AB}$ geschaltet werden. Dabei ist der Schalter Ta aktiv, wenn am Pol A eine positive und am Pol B eine negative Spannung anliegt. Der Transistor Tb ist in diesem Fall gesperrt. Umgekehrt ist der Transistor Tb aktiv, wenn am Pol B eine positive und am Pol A eine negative Spannung anliegt. In diesem Fall ist der Transistor Ta gesperrt. Bei dem Transistor Ta handelt es sich um einen npn-Transistor, während der Transistor Tb ein pnp-Transistor ist.

Nachfolgend wird das Schaltverhalten für den Fall der Wechselspannungsspeisung im Einzelnen beschrieben. Bei Gleichspannungsspeisung vereinfacht sich die Funktion derart, dass nur noch eine Stromrichtung betrachtet werden muss, wobei die Polarität keine Rolle spielt.

Zustand 1 (Kaltzustand):

An den Polen A und B liegt eine Wechselspannung, deren Amplitude kleiner als die Spannung ist, bei der das LED-Signal zu leuchten beginnen soll. Die Widerstände R3 und R4 des Spannungsteilers R3/R4 sind derart dimensioniert, dass die Basis des Transistors Ta bei positiver Halbwelle, d. h. Pol A ist positiv und Pol B ist negativ, positiver als der Emitter von Ta ist. Dadurch ist der Transistor Ta leitend. Der andere Transistor Tb ist in diesem Zustand gesperrt. Der Widerstand R2 wird parallel zur LED L geschaltet. Bei der anderen Halbwelle, d.h. Pol A ist negativ und Pol B ist positiv, steuert der Transistor Tb analog durch und schaltet auch für diese Halbwelle den Widerstand parallel zur LED L.

Vorzugsweise sind die Widerstände R3 und R4 wesentlich hochohmiger als R1 und R2, so dass der sich einstellende Strom vorrangig durch die Summe von R1 und R2 bestimmt wird. Über R2 und die Diode Da bzw. Db fällt eine Spannung ab, die in diesem Zustand immer kleiner als die Flussspannung Uf(L) der Leuchtdiode plus die Flussspannung der Graetzbrücke 2*Uf(D) ist. Die LED L bleibt dunkel. Die Anordnung verhält sich aufgrund des Stromflusses niederohmig. Dieser Zustand bildet den Kaltzustand einer herkömmlichen Glühlampe nach. Auch eine Glühlampe verhält sich in diesem Zustand niederohmig und leuchtet nicht.

Zustand 2 (Nachtzustand) :

Mit steigender Spannung erhöht sich der Strom durch die Widerstände R1 und R2 und somit auch der Spannungsabfall über R2. Erreicht der Spannungsabfall über R2 die Flussspannung der LED L plus die Flussspannung der Graetzbrücke, so beginnt die LED L zu leuchten. In diesem Zustand tritt eine Stromteilung auf. Ein Teil des Stromes fließt über den Widerstand R2, ein anderer Teil über die LED L. Aufgrund der Stromteilung ist die Leuchtstärke der LED L kleiner als für den Fall, dass der gesamte Strom durch die LED L fließen würde. Dieser Zustand entspricht der Nachtabsenkung bei einem Signal mit herkömmlicher Glühlampe.

Zustand 3 (Tagzustand) :

Steigt die Spannung an den Polen A und B weiter an, so wird die Basis des Transistors Ta negativer als der Emitter. Bei dem anderen Transistor Tb wird die Basis dagegen positiver als der Emitter. Das ist der Fall, da die Emitter der Transistoren Ta und Tb über die Graetzgleichrichterbrücke mit der Kathode der LED L verbunden sind und die resultierende Spannung um eine feste Größe, nämlich die Flussspannung Uf (L) der LED L zuzüglich der Flussspannungen Uf (D) der jeweils teilenden Dioden D negativer als der Pol A ist. Die Spannung an der Basis von Ta bzw. Tb wird dagegen direkt von der Speisespannung $U_{AB}$ abgeleitet. Ab einer Spannung von

$$U_{AB} \approx U_{R3} \times \frac{R3 + R4}{R3} = (Uf(L) + 2 * Uf(D)) * \frac{R3 + R4}{R3}$$

sperrt der Transistor Ta bzw. Tb und der gesamte Strom fließt über die LED L. Der LED-Strom wird ausschließlich durch R1 bestimmt und die LED L leuchtet mit ihrer vollen Helligkeit. Dieser Zustand entspricht dem Tagbetrieb bei einem Signal mit herkömmlicher Glühlampe.

Diese drei Zustände zeigen, dass sich die Kennlinie der Schaltungsanordnung der Kennlinie einer herkömmlichen Glühlampe annähert.

Die Widerstände R1 und R4 besitzen ein definiertes Ausfallverhalten, wodurch sich Fehler der Bauelemente R3, R2, des Schalters S, der Dioden D und der LED L in ihren Auswirkungen begrenzen lassen.

Mit der beanspruchten Schaltungsanordnung kann die Lichtleistung gegenüber der bekannten Schaltungsanordnung erhöht werden, wobei die Eigenschaften der hohen Verfügbarkeit, der Änderung der Helligkeit in Abhängigkeit von der Ansteuerung, der Unterdrückung von Störsignalen sowie des definierten Ausfallverhaltens erhalten bleiben.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen von der Erfindung Gebrauch machen.

**Patentansprüche**

1. Schaltungsanordnung zum Betreiben eines Leuchtzeichens, insbesondere eines LED-Signals, mit mindestens einer Leuchtdiode (L), zu der ein erster Widerstand (R1) in Reihe und eine Steuerung parallel geschaltet sind, wobei die Steuerung eine Reihenschaltung mit einem zweiten Widerstand (R2) und einem Schalter (S) aufweist und der Schalter S von einem Spannungsteiler (R3/R4) angesteuert wird, der zu der Reihenschaltung aus der Steuerschaltung und dem ersten Widerstand (R1), parallel geschaltet ist, **dadurch gekennzeichnet, dass** die Leuchtdiode (L) in dem Mittelzweig einer Graetzgleichrichterbrücke eingebunden ist und dass der Schalter (S) zwei parallel geschaltete Transistoren (Ta und Tb) aufweist, zu denen jeweils Dioden (Da und Db) zur Vorgabe entgegengesetzter Stromrichtungen in Reihe geschaltet sind, wobei die Emitter der Transistoren (Ta und Tb) über die Graetzgleichrichterbrücke mit der Kathode der Leuchtdiode (L) verbunden sind.

**Claims**

1. Circuit arrangement for operating an illuminated sign, in particular an LED signal, having at least one light-emitting diode (L) which is connected in series with a resistor (R1) and in parallel with a controller, with the controller having a series circuit with a second resistor (R2) and a switch (S) and the switch S being driven by a voltage divider (R3/R4), which is connected in parallel with the series circuit comprising the control circuit and the first resistor (R1) **characterized in that** the light-emitting diode (L) is incorporated in the central branch of a Graetz rectifier bridge, and **in that** the switch (S) has two parallel-connected transistors (Ta and Tb) which are each connected in series with diodes (Da and Db) for prescribing opposing current directions, the emitters of the transistors (Ta and Tb) being connected to the cathode of the light-emitting diode (L) via the Graetz rectifier bridge.

**Revendications**

1. Circuit pour faire fonctionner un voyant lumineux, notamment un signal DEL, comprenant au moins une diode électroluminescente (L) avec laquelle une première résistance (R1) est branchée en série et une commande est branchée en parallèle, la commande comportant un circuit série composé d'une deuxième résistance (R2) et d'un interrupteur (S) et l'interrupteur (S) étant commandé par un diviseur de tension (R3 / R4) qui est branché en parallèle avec le circuit série composé du circuit de commande et de la première résistance (R1), **caractérisé par le fait que** la diode électroluminescente (L) est insérée dans la branche médiane d'un pont redresseur de Graetz et que l'interrupteur (S) comporte deux transistors (Ta et Tb) qui sont branchés en parallèle et avec lesquels des diodes (Da et Db) sont respectivement branchées en série pour prescrire des sens de courant opposés, les émetteurs des transistors (Ta et Tb) étant reliés à la cathode de la diode électroluminescente (L) par l'intermédiaire du pont redresseur de Graetz.

FIG 1

EP 1 502 481 B1

FIG 2

$U_f(L) + 2* U_f(D)$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19943256 A1

- DE 19846753 A1